# EUROPÄISCHE PATENTSCHRIFT

(11) **EP 2 642 693 B1**
(45) Veröffentlichungstag und Bekanntmachung des Hinweises auf die Patenterteilung: **10.12.2014**
(21) Anmeldenummer: 12160443.3
(22) Anmeldetag: 20.03.2012
(51) Int. Cl.: H04L 12/24, G05B 19/00

(54) **Verfahren zur Anbindung eines Schaltanlagen-Automatisierungs-Gerätes gemäß IEC61850 an einen Industrie-Automatisierungs-Feldbus**
Method for connecting a switching assembly automation device in accordance with IEC61850 to an industrial automation field bus
Procédé destiné à relier un appareil d'automatisation de dispositifs de commutation conformément à la norme IEC61850 sur un bus de terrain d'automatisation industriel

(43) Veröffentlichungstag der Anmeldung: 25.09.2013
(73) Patentinhaber: SCHNEIDER ELECTRIC AUTOMATION GMBH, 97828 Marktheidenfeld (DE)
(72) Erfinder: Patri, Michael, 63741 Aschaffenburg (DE)
(74) Vertreter: Stoffregen, Hans-Herbert

(56) Entgegenhaltungen:
- US-A1- 2007 016 896
- US-A1- 2010 020 724

## Beschreibung

Die Erfindung bezieht sich auf ein Verfahren zur Anbindung eines Schaltanlagen-Automatisierungs-Gerätes wie Stations-, Schutz- oder Feldgerätes gemäß IEC61850 Kommunikationsnorm an einen Industrie-Automatisierungs-Feldbus wie MODBUS eines Industrie-Automatisierungs-Systems, ein Verfahren zum Erzeugen einer DTM (Device Type Manager)-Komponente, wobei die DTM-Komponente das Schaltanlagen-Automatisierungs-Gerät repräsentiert und definierte Schnittstellen zu einem FDT-Rahmenprogramm bereitstellt sowie auf ein Verfahren zur Erzeugung einer Gerätebeschreibungsdatei zur Durchführung obiger Verfahren.

Im Bereich der Automation elektrischer Schaltanlagen sind Schaltanlagen-Automatisierungs-Geräte bekannt, die Daten nach der IEC61850-Kommunikationsnorm austauschen.

Die IEC61850 (Communication Networks and Systems for Power Utility Automation)-Kommunikationsnorm wird im Bereich der Automation elektrischer Schaltanlagen (Power Utility Automation (PUA)) verwendet und beschreibt den Austausch von Daten zwischen intelligenten elektronischen Geräten (Intelligent Elektronic Devices (IED)). Der IEC61850-6-Standard definiert eine SCL- (Substation Configuration description Language) für diese Kommunikation, die auf XML (Extensible Markup Language) basiert. SCL-Dateien, welche die Eigenschaften eines intelligenten elektrischen Gerätes (IED) beschreiben, sind z. B. ICD- (IED Capability Description) oder die .IID-Datei (Instantiated IED Description).

Zur Zeit sind keine Informationen über Feldbusse der Industrie-Automation innerhalb einer SCL-Datei verfügbar und daher ist es nicht möglich, ein Geräte-DTM unmittelbar aus einer SCL-Datei zu generieren. Daher muss eine Einbindung der IEC61850 konformen Geräte durch eine manuelle Konfiguration erfolgen.

Eine bekannte Technologie zur Handhabung von industriellen Feldgeräten in einem industriellen Steuerungs- oder Visualisierungssystem ist das FDT (Field Device Tool) / DTM (Device Type Manager)-Konzept, welches durch die FDT-Spezifikation der FDT-Gruppe definiert ist. Die FDT-Technologie ist kommunikationsunabhängig.

Dabei wird ein Geräte-DTM von einem Gerätehersteller zur Verfügung gestellt und repräsentiert die Anwendungslogik sowie die Parameter eines Feldgerätes und kann verwendet werden, um das Feldgerät an einem industriellen Feldbus zu betreiben und zu parametrieren. Die DTM's laufen innerhalb einer Frame-Applikation, der sogenannten FDT-Frame-Applikation. Die FDT-Frame-Applikation kann z. B. in einem Gerätekonfigurationsprogramm einer Anwenderkonsole implementiert sein. Die DTM's haben ein definiertes Interface zu der FDT-Frame-Applikation und können in jeder der FDT-Frame-Applikationen verwendet werden. Ferner ist ein Kommunikations-DTM vorgesehen, welches ein Kommunikations-Interface zu dem jeweiligen Feldbus ist, welches auf die angeschlossenen Feldgeräte zugreifen kann.

Eine Gerätebeschreibungssprache wie FDCML (Field Device Configuration Markup Language), EDDL (Electronic Device Description Language) oder DDXML (Device Description Extensible Markup Language) eines Industrie-Automations-Gerätes kann verwendet werden, um ein einfaches Geräte-DTM für den beschriebenen Gerätetyp zu generieren. Mehrere DTM-Generierungs-Tools sind verfügbar, um automatisch ein Geräte-DTM aus einer Gerätebeschreibung zu generieren.

In der DE 102 53 603 A1 ist ein Verfahren zum Erzeugen von Softwaremodulen für Feldgeräte der Prozessautomatisierungstechnik beschrieben. Die Softwaremodule dienen als Gerätebeschreibungen und definieren Schnittstellen zu Anwendungsprogrammen in Prozessleitsystemen. Bei dem Verfahren werden aus Standard-Gerätebeschreibungen für Feldgeräte syntaktisch und semantisch korrekte Standard-Gerätebeschreibungen erzeugt und diese mittels eines Compilers in entsprechende Softwaremodule umgewandelt. Die Schnittstellen und die Softwaremodule entsprechen den FDT/DTM-Spezifikationen. Als Standard-Gerätebeschreibungen sind PDM-Gerätebeschreibungen, HCF-Gerätebeschreibungen oder firmenspezifische Gerätebeschreibungen angegeben. Die syntaktisch und semantisch korrekte Gerätebeschreibung ist als EDD1.1-Gerätebeschreibung angegeben, welche mittels einer Konvertierung der Standard-Gerätebeschreibungen erzeugt wird.

Bei dem Verfahren werden in einem ersten Verfahrensschritt aus Standard-Gerätebeschreibungen wie PDM-Gerätebeschreibungen, HCF-Gerätebeschreibungen oder firmenspezifischen Gerätebeschreibungen syntaktisch und semantisch korrekte Gerätebeschreibungen erstellt. Hierfür wird ein erster Compiler eingesetzt. Als Beispiel für eine semantisch und syntaktisch korrekte Standard-Gerätebeschreibung ist die Standard-Gerätebeschreibung EDD1.1 angegeben. Anschließend wird die syntaktisch und semantisch korrekte Standard-Gerätebeschreibung mit Hilfe eines zweiten Compilers in ein Softwaremodul wie z. B. DTM umgewandelt, das definierte Schnittstellen zur Anwendungsprogrammen in Prozessleitsystemen aufweist. Durch die Erzeugung der Softwaremodule über den Zwischenschritt über eine EDD sollen sich wesentliche Vorteile ergeben.

In einem Artikel von T. Hartlich: "DTM aus vorhandener EDD generieren; Hemmnisse bei der Verwendung von FDT/DTM-Technologie lassen sich beseitigen", Fachbeitrag in A & D Newsletter Mai 2007, ist ein DTM-Generator als Softwaretool beschrieben, das Gerätebeschreibungen übersetzt, die dem Standard IEC61804 entsprechen. Der Standard IEC61804 beschreibt die EDDL (Electronic Device Description Language).

Die US 2010/0020724 A1 bezieht sich auf ein Verfahren zur Konfiguration eines intelligenten elektronischen Gerätes, insbesondere eines elektronischen Gerätes nach dem IEC61850-Standard in einer elektrischen Schaltanlage. Ein Proxy-IED ist als NCC-Gateway zur Konvertierung von Daten zwischen nicht-IEC61850- und IEC61850-Kommunikationsprotokollen vorgesehen. Das Proxy-IED ist auf der Basis eines Sets von Mappings konfiguriert, die in der Konfigurations-Beschreibungs-Datei der elektrischen Schaltanlage codiert sind. Die Konfigurations-Beschreibungs-Datei kann Mappings für Daten-Übertragungen zwischen nicht-IEC61850- und IEC61850-Kommunikationsprotokollen enthalten.

Davon ausgehend liegt der vorliegenden Erfindung die Aufgabe zugrunde, ein Verfahren der eingangs genannten Art derart weiterzubilden, dass die Anbindung von Geräten nach dem IEC61850-Standard an Feldbusse nach dem Industriestandard erheblich vereinfacht wird.

Die Aufgabe wird erfindungsgemäß durch folgende Verfahrensschritte gelöst:
- Erzeugen einer modifizierten SCL (Substation Configuration Description Language)-Gerätebeschreibungsdatei für das Schaltanlagen-Automatisierungs-Gerät, wobei eine standardisierte SCL-Gerätebeschreibungsdatei durch Implementierung zumindest eines Daten-Objekts mit Mapping-Informationen in Form von Kommunikations- und Funktions-Parametern des Industrie-Automatisierungs-Feldbusses erweitert wird,
- Compilieren der modifizierten SCL-Gerätebeschreibungsdatei in eine DTM (Device Type Manager)-Komponente, in der Daten und Funktionen des Schaltanlagen-Automatisierungs-Gerätes einschließlich der Mapping-Informationen gekapselt sind und die als Softwaremodul für das Schaltanlagen-Automatisierungs-Gerät dient und eine definierte Schnittstelle zu einer FDT-Frame-Applikation in dem Industrie-Automatisierungs-System aufweist,
- Konfiguration des Schaltanlagen-Automatisierungs-Gerätes mittels der FDT- Frame-Applikation unter Verwendung der DTM-Komponente, wobei unter Berücksichtigung der gekapselten Mapping-Informationen ein Mapping der IEC61850 Kommunikations- und Funktions-Parameter auf die Kommunikations-Parameter und Funktionsbeschreibungen des Industrie-Automatisierungs-Feldbusses durchgeführt wird.

Der Erfindung liegt die Idee zugrunde, für ein Schaltanlagen-Automatisierungs-Gerät auf der Grundlage einer SCL-Gerätebeschreibungsdatei nach IEC61850-Kommunikationsnorm eine DTM-Komponente zu generieren, um das Schaltanlagen-Automatisierungs-Gerät nach dem FDT-/DTM-Konzept an einem Industrie-Automatisierungs-Feldbus zu betreiben. Durch die Beschreibung von Kommunikations- und Funktions-Parametern des Industrie-Automatisierungs-Feldbusses innerhalb der SCL-Gerätebeschreibung kann die SCL-Gerätebeschreibung verwendet werden, um die DTM-Komponente zu generieren.

Dadurch wird gegenüber dem Stand der Technik der Vorteil erreicht, dass Schaltanlagen-Automatisierungs-Geräte gemäß IEC61850 mittels FDT-/DTM-Technologie an einem Industrie-Automatisierungs-Feldbus gemeinsam mit Industrie-Automatisierungs-Geräten betrieben werden können. Eine DTM-Komponente für IEC61850-Geräte mit zusätzlichen Feldbus-Schnittstellen für die industrielle Automation müsste nach dem Stand der Technik manuell erzeugt werden.

Gemäß einer bevorzugten Verfahrensweise ist vorgesehen, dass die Mapping-Informationen in einem Private-XML-Element der SCL-Gerätebeschreibungsdatei gekapselt werden, die als Erweiterung der SCL-Gerätebeschreibungsdatei definiert sind.

Eine weitere bevorzugte Verfahrensweise zeichnet sich dadurch aus, dass das Private-XML-Element durch einen Feldbus-Typ des Industrie-Automatisierungs-Feldbusses sowie durch ein oder mehrere Daten-Felder definiert wird, wobei ein erstes Daten-Feld ein Daten-Objekt oder Daten-Attribut repräsentiert. Das Daten-Objekt-Feld ist durch einen Großbuchstaben gefolgt von einem Daten-Klasse-Typ gemäß IEC61850 und das Daten-Attribut-Feld ist durch einen Großbuchstaben gefolgt von einem Daten-Attribute-Typ gemäß IEC61850 definiert.

Vorzugsweise folgen dem ersten Daten-Feld weitere Daten-Felder, wobei die weiteren Daten-Felder die funktionalen Nebenbedingungen (FC = Functional Constraints) nach dem IEC61850 Standard repräsentieren, wie ein Digital-Status-Feld, ein Messwert-Feld, ein Digital-Steuerungs-Feld, ein Skalierwert-Feld, eine Skalierregister-Feld und/oder ein Eingangswert-Feld, definieren.

Es ist vorgesehen, dass eine Beschreibung von Spezifikationen des Industrie-Automatisierungs-Feldbusses MODBUS innerhalb der SCL-Gerätebeschreibungsdatei erfolgt. Dadurch wird die Voraussetzung geschaffen, dass die SCL-Gerätebeschreibungsdatei zur Generierung eines DTMs oder einer weiteren Gerätebeschreibungsdatei verwendet werden kann.

Vorzugsweise werden die Kommunikationsparameter des Industrie-Automatisierungs-Feldbusses MODBUS wie z. B. Kommunikations-Mode, Baudrate, Adressbereich, Parität, Stop-Bits sowie Interfaces innerhalb eines L-Device-XML-Element der SCL-Gerätebeschreibungsdatei definiert.

Ferner ist vorgesehen, dass die Beschreibung des Feldbus-Parameter-Mappings innerhalb der Daten-Objekt- bzw. Daten-Attribut-XML-Elementen der SCL-Gerätebeschreibungsdatei erfolgt.

Als SCL-Gerätebeschreibungsdatei wird vorzugsweise eine .ICD-Datei oder .IID-Datei verwendet.

Des Weiteren bezieht sich die Erfindung auf ein Verfahren zum Erzeugen einer DTM-Komponente, wobei die DTM-Komponente als Softwaremodul dient und definierte Schnittstellen zu einer FDT- Frame-Applikation aufweist.

Zur Erzeugung der DTM-Komponente ist vorgesehen, dass eine Standard-SCL-Gerätebeschreibungsdatei nach IEC61850 modifiziert wird, indem Daten-Objekte mit Mapping-Informationen in Form von Kommunikations-Parametern und Funktions-Paramtem eines Industrie-Automatisierungs-Feldbusses in die SCL-Gerätebeschreibungsdatei implementiert werden und dass anschließend aus der modifizierten SCL-Gerätebeschreibungsdatei mittels eines Generators die DTM-Komponente generiert wird.

Gemäß bevorzugter Verfahrensweise ist vorgesehen, dass die DTM- Komponente mittels eines Compilers unmittelbar aus der modifizierten SCL-Gerätebeschreibungsdatei generiert wird.

Alternativ ist vorgesehen, dass die DTM-Komponente mittelbar aus der modifizierten SCL-Gerätebeschreibungsdatei generiert wird, wobei die SCL-Gerätebeschreibungsdatei mittels eines ersten Compilers zunächst in eine Standard-Gerätebeschreibungsdatei wie DDXML-Datei und diese mittels eines weiteren DTM-Generierungs-Tools in die DTM- Komponente übersetzt wird.

Auch kann die modifizierte SCL-Gerätebeschreibungsdatei direkt oder indirekt während der Laufzeit einer generischen DTM-Komponente in einem Interpreter interpretiert werden.

Bei der Compilierung der modifizierten SCL-Gerätebeschreibungsdatei wird überprüft, ob Mapping-Informationen in der Datei enthalten sind und ob entsprechende Daten verfügbar sind, wobei gegebenenfalls auf externe Daten, wie Definitionen aus dem IEC61850 Standard, zugegriffen wird.

Ferner ist vorgesehen, dass bei der Analyse der modifizierten SCL-Gerätebeschreibungsdatei eine Suche nach Mapping-Informationen, insbesondere den Private-XML-Elementen durchgeführt wird und dass die Mapping-Informationen extrahiert werden und dass die extrahierten Daten der Mapping-Informationen die Grundlage für die Generierung der DTM-Komponente bilden.

Auch können Feldbus-unabhängige Daten wie Produktname, Herstellername oder Versionsnummer zur Bildung einer grafischen Bedienoberfläche des Schaltanlagen-Automatisierungs-Gerätes extrahiert werden.

Um auf vorhandene DTM-Generierungs-Tools zurückzugreifen ist vorgesehen, dass die modifizierte SCL-Gerätebeschreibungsdatei zunächst in eine Standard-Gerätebeschreibungsdatei übersetzt wird, wobei der Verfahrensschritt des Übersetzens folgende Schritte umfasst:
- Prüfen der SCL-Gerätebeschreibungsdatei hinsichtlich der Verfügbarkeit bus-spezifischer Mapping-Informationen ,
- Suche nach Private-XML-Elementen in der SCL-Gerätebeschreibungsdatei und
- Extrahieren der Beschreibung eines Mappings von IEC61850-Objekten auf den Industrie-Automatisierungs-Feldbus.

Vorzugsweise wird die SCL-Gerätebeschreibungsdatei in einen Übersetzer eingelesen, wobei gegebenenfalls die Gültigkeit der SCL-Gerätebeschreibungsdatei geprüft wird. Ferner wird die SCL-Gerätebeschreibungsdatei hinsichtlich verfügbarer Mapping-Informationen analysiert und anschließend in eine Standard-Gerätebeschreibungsdatei übersetzt. Anschließend wird die Standard-Gerätebeschreibungsdatei mittels eines Generierungstools in das Software-Modul compiliert.

Als alternative Verfahrensweise wird vorgeschlagen, dass die SCL-Gerätebeschreibungsdatei mittels eines Interpreters während der Laufzeit einer generischen DTM-Komponente interpretiert wird, wobei die SCL-Gerätebeschreibungsdatei zunächst in einem Speicher abgelegt und nach dem Start des generischen SoftwareModuls importiert wird. Sodann wird die SCL-Gerätebeschreibungsdatei hinsichtlich verfügbarer Daten analysiert, indem Mapping-Informationen aufgesucht werden, welche ein Mapping der verfügbaren IEC61850-Objekten auf den industriellen Automatisierungs-Feldbus beschreiben. Anschließend werden die Mapping-Informationen extrahiert.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von bevorzugten Ausführungsformen.

Es zeigen:
- Fig. 1: eine schematische Darstellung eines Industrie-Automatisierungssystems mit Schaltanlagen-Automatisierungs-Gerät,
- Fig. 2: eine Struktur einer Standard-SCL-Gerätebeschreibungsdatei,
- Fig. 3: eine Struktur eines logischen Knotens in einer SCL-Gerätebeschreibungsdatei unter Einbindungen von Private-XML-Elementen,
- Fig. 4: zusätzliche Kommunikations-Parameter innerhalb einer ICD-Datei mittels Private-XML-Elementen,
- Fig. 5: ein Mapping von üblichen MODBUS-Kommunikationsparametern auf IEC61850-Objekte,
- Fig. 6: einen Auszug aus einer modifizierten SCL-Gerätebeschreibungsdatei,
- Fig. 7: eine Struktur einer Standard-Gerätebeschreibungsdatei eines industriellen Feldgerätes,
- Fig. 8: eine schematische Darstellung eines Mappings einer modifizierten SCL-Gerätebeschreibungsdatei auf eine Standard-Gerätebeschreibungsdatei,
- Fig. 9: eine schematische Darstellung der Generierung eines Geräte-DTM, mittels eines DTM-Generierungs-Tools aus einer modifizierten SCL-Gerätebeschreibungsdatei,
- Fig. 10: ein Ablaufdiagramm eines ersten Verfahrens gemäß Fig. 9 zur Generierung eines DTM aus einer SCL-Datei gemäß dem in Fig. 2 dargestellten Schema,
- Fig. 11: eine schematische Darstellung eines zweiten Verfahrens zur Generierung eines DTM aus einer SCL-Datei gemäß einer zweiten Ausführungsform,
- Fig. 12: ein Ablaufdiagramm des zweiten Verfahrens gemäß Fig. 11,
- Fig. 13: eine schematische Darstellung eines dritten Verfahrens unter Zuhilfenahme einer generischen DTM-Komponente, wobei die generische DTM-Komponente die SCL-Datei direkt interpretiert,
- Fig. 14: ein Ablaufdiagramm des dritten Verfahrens gemäß Fig. 13,
- Fig. 15: eine schematische Darstellung eines vierten Verfahrens unter Zuhilfenahme einer generischen DTM-Komponente, wobei die generische DTM-Komponente die SCL-Datei in eine Standard-Gerätebeschreibung übersetzt,
- Fig. 16: einen Verfahrensablauf des vierten Verfahrens gemäß Fig. 15 und
- Fig. 17: eine fünfte Ausführungsform des erfindungsgemäßen Verfahrens.

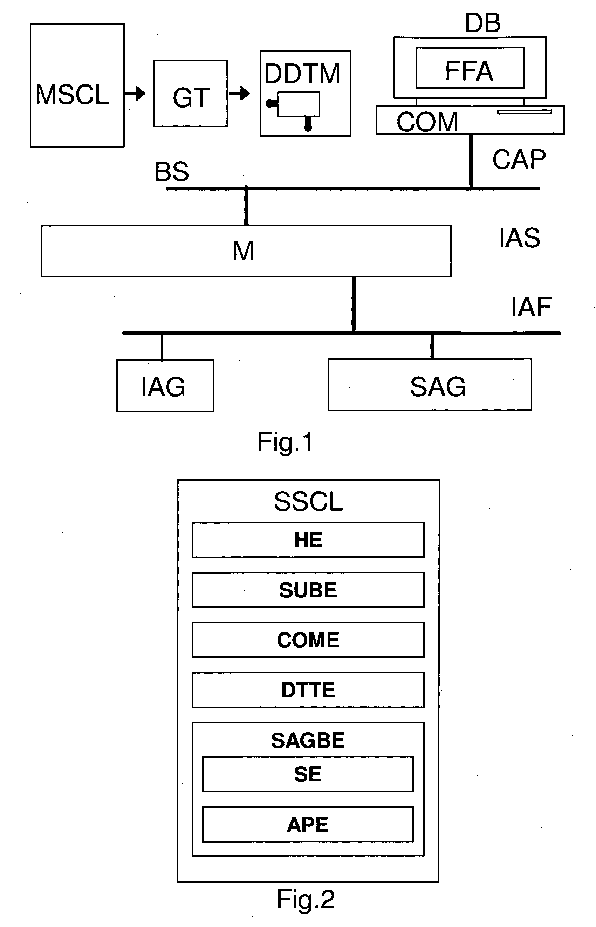

Fig. 1 zeigt rein schematisch ein Verfahren zur Anbindung eines Schaltanlagen-Automatisierungs-Gerätes SAG wie Stations-, Schutz- oder Feldgerätes gemäß IEC61850-Kommunikationsnorm an einen Industrie-Automatisierungs-Feldbus IAF wie MODBUS eines Industrie-Automatisierungs-Systems IAS. Das Verfahren umfasst das Erzeugen einer modifizierten SCL-Gerätebeschreibungsdatei MSCL für das Schaltanlagen-Automatisierungs-Gerät SAG, wobei in eine standardisierte SCL-Gerätebeschreibungsdatei zumindest ein Daten-Objekt mit Mapping-Informationen in Form von Kommunikations- und Funktions-Parametern des Industrie-Automatisierungs-Feldbusses IAF implementiert wird. Sodann wird aus der modifizierten SCL-Gerätebeschreibungsdatei MSCL eine DTM-Komponente DDTM mittels eines Generierungstools GT generiert. In der DTM-Komponente sind alle Daten und Funktionen des Schaltanlagen-Automatisierungs-Gerätes SAG einschließlich der Mapping-Informationen gekapselt. Diese kann sodann als DTM-Komponente für das Schaltanlagen-Automatisierungs-Gerät dienen und weist eine definierte Schnittstelle zu einer FDT-Frame-Applikation FFA in dem Industrie-Automatisierungs-System IAS auf. Sodann erfolgt die Konfiguration des Schaltanlagen-Automatisierungs-Gerätes SAG mittels der FDT-Frame-Applikation unter Verwendung der DTM-Komponente DDTM. Unter Berücksichtigung der gekapselten Mapping-Informationen können sodann die IEC61850-Kommunikations- und Funktions-Parameter über den Industrie-Automatisierungs-Feldbus IAF übertragen werden.

Fig. 2 zeigt eine Datenstruktur einer SCL-Gerätebeschreibungsdatei SCLGBD nach Kommunikationsnorm IEC61850 zum Einrichten von Schaltanlagen-Automatisierungs-Geräten der Energie-Automation, die auch als Intelligente-Elektronische-Geräte (IED Intelligente-Electronic-Device) bezeichnet werden. Die Gerätebeschreibungsdatei SCLGBD umfasst ein Header-Element HE, welches die Gerätebeschreibungsdatei SCLGBD identifiziert, insbesondere Informationen über die Version und Revisionen enthält. Ferner ist ein Substation-Element SUBE vorgesehen, welches die funktionale Struktur einer Schaltanlage beschreibt, in der die Schaltanlagen-Automatisierungs-Geräte eingesetzt werden sollen.

Des Weiteren ist ein Kommunikations-Element COME vorgesehen, in dem direkte Kommunikationsverbindungen nach der Kommunikationsnorm IEC61850 beschrieben sind.

In einem Data-Type-Template-Element DTTE werden Datentypen definiert, insbesondere instanziierbare logische Knoten-Typen.

Des Weiteren ist ein Geräte-Element SAGBE vorgesehen, welches die Konfiguration des Gerätes SAG beschreibt. Innerhalb des Geräte-Elementes SAGBE ist ein Service-Element SE vorgesehen, welches verfügbare Services zum Austausch von Daten, die in IEC61850 definiert sind, definiert. Ferner ist ein Access-Point-Element APE vorgesehen, welches verfügbare Kommunikationszugriffspunkte in Bezug auf die Funktionalität des Gerätes SAG definiert.

In dem Data Type Template-Element DTTE sind Datentypen in Form von logischen Knoten LN1...LNn definiert. Ein logischer Knoten LN1...LNn wird gebündelt aus Daten-Objekt-Elementen DOE, die wiederum einen Daten-Objekt-Typ aufweiset, der auf einer in der Kommunikationsnorm IEC61850-7-3- definierten CDC (Common Data Class) basiert. Ebenfalls sind in dem DTTE Daten-Attribute-Typen und Enumerationen-Typen definiert

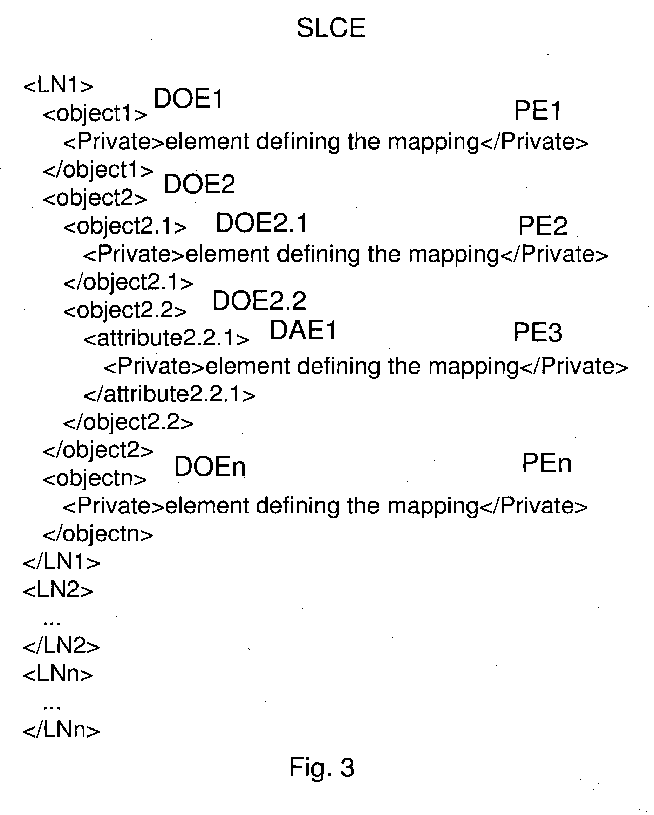

Fig. 3 zeigt rein schematisch einen Auszug SCLE einer SCL-Gerätebeschreibungsdatei, welche die Struktur der logischen Knoten LN1...LNn darstellt. Der logische Knoten LN1 umfasst im dargestellten Beispiel die Daten-Objekt-Elemente DOE1, DOE2 ... DOEn, wobei das Daten-Objekt-Element DOE2 Daten-Objekt-Elemente DOE2.1, DOE2.2 aufweist und das Daten-Objekt-Element DOE2.2 ein Daten-Attribut-Element DAE1 definiert.

Die logischen Knoten LN1...LNn beschreiben die kleinste Einheit einer Geräte-Funktion. Dabei sind die logischen Knoten LN1...LNn gebildet aus den Daten-Objekt-Elementen DOE1 ... DOEn, welche jeweils die auszutauschenden Daten (Mapping-Informationen) beschreiben.

Daten-Objekt-Typen bestehen aus Daten-Attribut-Elementen DAE oder bereits definierten Daten-Objekt-Elementen. Das Daten-Attribut-Element DAE hat eine funktionale Beschränkung und kann entweder ein Basistyp, eine Aufzählung oder eine Struktur eines Daten-Attribut-Typs sein.

Gemäß der Erfindung werden die Daten-Objekt-Elemente DOE1...DOEn verwendet, um Parameter/Informationen eines Industrie-Automatisierungs-Feldbusses in die SCL-Gerätebeschreibungsdatei SCLGBD aufzunehmen. Diese Erweiterung erfolgt durch Aufnahme von Private-XML-Elementen PE1, PE2, PE3 in die jeweiligen Daten-Objekt-Elemente DOE1 ... DOEn oder Daten-Attribut-Elemente DAE1 ... DAEn.

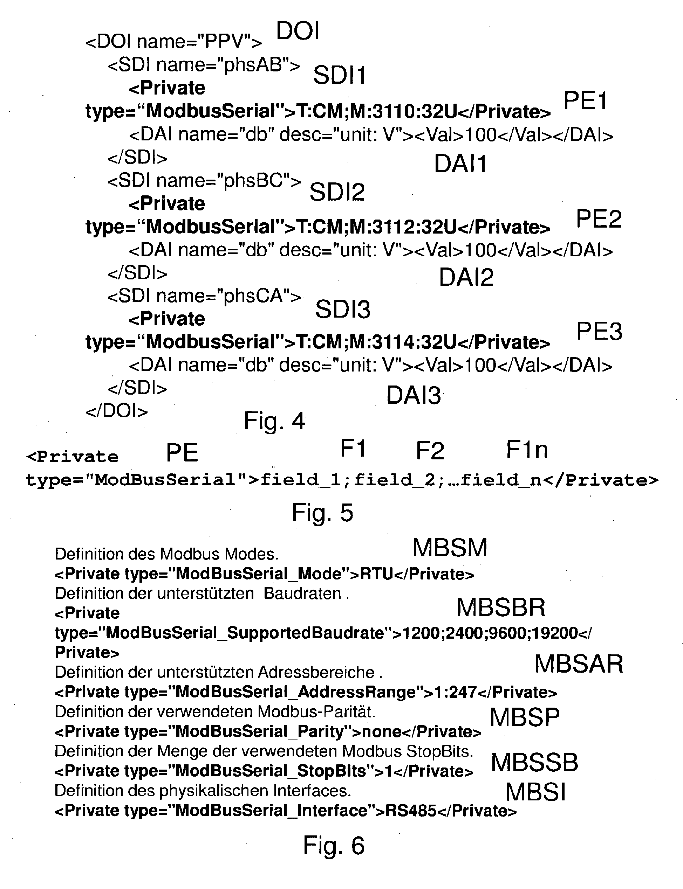

Fig. 4 zeigt einen Auszug SCLE einer SCL-Gerätebeschreibungsdatei, in die Mapping-Informationen eines Industriellen Automatisierungs-Feldbusses IAF, am Beispiel des Feldbusses MODBUS Serial Line, implementiert sind. Dargestellt ist ein Daten-Objekt DOI. Dieses Daten-Objekt umfasst wiederrum Sub-Daten-Objekte SDI1...SDI3 mit. Die Sub-Daten-Objekte SDI1, SDI2, SDI3 werden verwendet, um spezielle, instanzenbezogene Werte für die Datenobjekte und deren Attribute zu definieren.

Im dargestellten Ausführungsbeispiel werden sogenannte Private-XML-Elemente PE1, PE2, PE3 eines spezifischen Typs innerhalb der Daten-Objekt-Elemente DOI, Sub-Daten-Objekt-Elemente SDI1...SDI3 bzw. Daten-Attribute-Elemente DAI1...DAI3verwendet, die ein Mapping der korrespondierenden Elemente auf die Kommunikation des Industrie-Automatisierungs-Feldbusses beschreiben.

Jedes <private> XML-Element PE1-PE3 weist einen herstellerbezogenen Typ als Attribut auf, im vorliegenden Fall den Feldbus-Typ MODBUS-Serial-Line gekennzeichnet durch die Typenbezeichnung "ModbusSerial". Ergänzend folgt eine Beschreibung der verwendeten Daten. Dabei werden die Kommunikationsparameter gemäß der in Fig. 5 dargestellten Definition abgebildet bzw. gemappt.

Fig. 5 zeigt schematisch den Aufbau eines XML-Private-Elements PE zum Beschreiben des Daten-Mapping zwischen den IEC61850 Objekten und deren Abbildung auf einen industriellen Automatisierung-Feldbus IAF am Beispiel von Modbus-Serial-Line.

Die Abbildung der IEC61850 Objekten auf den industriellen Automatisierung-Feldbus IAF, wie für die MODBUS-Daten, wird aus mehreren Feldern F1 ... Fn gebildet, die durch Semikolons getrennt sind, wie in Fig. 5 dargestellt.

Das erste Feld F1 repräsentiert immer ein Daten-Objekt, Sub-Daten-Objekt oder ein Daten-Attribut, gegebenenfalls gefolgt von einem oder mehreren Daten-Referenz-Feldern F2 ... Fn. Das Daten-Objekt-Feld F1 wird dargestellt durch einen Großbuchstaben z. B. "T" gefolgt von einem Doppelpunkt und zwei Großbuchstaben, welche die "Common Data Class" gemäß IEC61850 beschreiben. Das Daten-Attribut-Feld wird durch einen Großbuchstaben z. B. "A" gefolgt von einem Doppelpunkt und zwei Großbuchstaben dargestellt, die den Attribut-Typ gemäß IEC61850-Standard beschreiben.

Die Beschreibung des MODBUS-Parameter-Mapping ist unmittelbar in jedem Daten-Objekt-, Sub-Daten-Objekt- bzw. Daten-Attribut-XML-Element in der SCL-Datei des IED's gemäß Fig. 5 angegeben, so dass mit diesen zusätzlichen Parametern die notwendigen Informationen verfügbar sind, um die IEC61850-Objekte über z. B. MODBUS-Serial-Line zu übertragen.

Fig. 6 zeigt beispielhaft eine Auflistung von Kommunikationsparametern, die unter dem XML-Element <LDevice> innerhalb der ICD-Datei des Feldgerätes konform zu dem IEC61850 Standard definiert sind. Hier werden generelle Kommunikations-Parameter eines industriellen Automatisierung-Feldbuses IAF beschrieben. Diese generellen Kommunikations-Parameter, wie Kommunikations-Mode MBSM, Baudrate MBSBR, Adressbereich MBSAR, Parität MBSP, Stop-Bits MBSSB sowie Schnittstelle MBSI, beschreiben die unterstützten Kommunikations-Eigenschaften der beschrieben Feldbus-Schnittstelle. Dargestellt sind die Kommunikations-Parameter am Beispiel von MODBUS Serial Line.

Obwohl das Beispiel auf dem MODBUS-Serial-Line-Feldbus-Typ basiert ist es ebenfalls möglich, die ICD-Datei mit Informationen anderer Feldbusse zu erweitern. Folglich ist es ebenfalls möglich, DTM's aus ICD-Dateien mit Erweiterungen für andere Feldbusse zu generieren. Des Weiteren besteht die Möglichkeit, andere SCL-Datei-Formate als die ICD-Datei als Input für die DTM-Generierung zu verwenden; denn die in den anderen Datei-Formaten beschriebenen Geräteeigenschaften sind vergleichbar, so dass diese Datei-Formate durch die selben Mechanismen erweitert werden können.

Allerdings dürfte die ICD-Datei als das meistgebräuchliche SCL-Dateiformat für die erfindungsgemäße Generierung von DTM's bevorzugt sein.

Die Private-XML-Elemente PE1 .. PEn des spezifischen Typs innerhalb der Daten-Objekt-Elemente DOE1...DOEn bzw. DOI, SDI1...SDI3 oder DAI1...DAI3-Elemente beschreiben ein Mapping des korrespondierenden Daten-Elementes auf die industrielle Feldbus-Kommunikation.

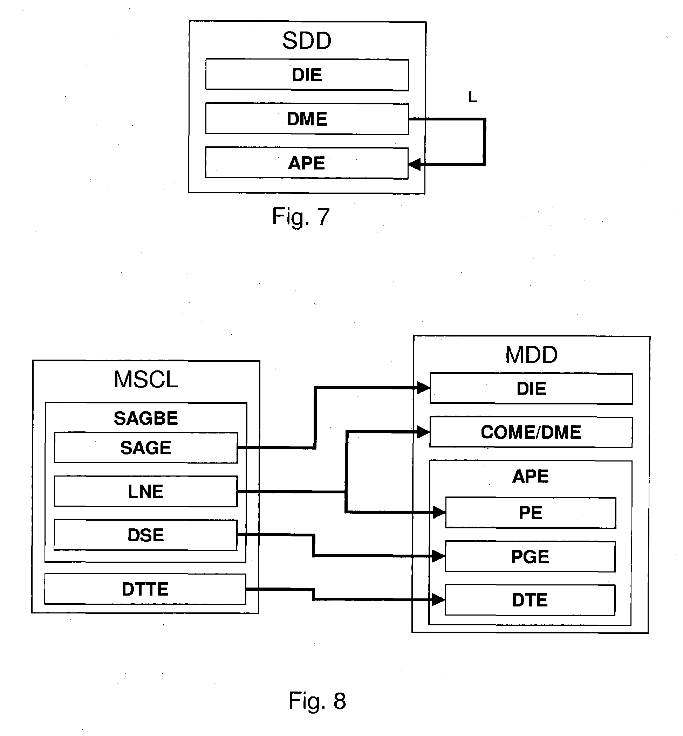

Fig. 7 zeigt eine einfache Struktur einer Standard-Gerätebeschreibungsdatei SDD des industriellen Feldgerätes IFG zum Betrieb an dem industriellen Feldbus IAF wie MODBUS. Die Gerätebeschreibungsdatei SDD umfasst einen Bereich für die Geräte-Identität, hier beschrieben als Device-Identity-Element DIE, einen Bereich für die Geräte-Eigenschaften, hier beschrieben als Device-Manager-Element DME und einem Bereich für die GeräteParameter und dessen Verhalten, hier beschrieben als Application-Process-Element APE.

Das Device-Identity-Element DIE definiert allgemeine, netzwerkunabhängige Eigenschaften, während das Device-Manager-Element DME Kommunikations-Parameter des industriellen Feldgerätes IFG beschreibt. Das Device-Manager-Element DME umfasst ein von der Funktion des industriellen Feldgerätes IFG unabhängigen Teil wie beispielsweise Transferrate, unterstützte Slave-Adressen etc. und einen Teil, in dem das Mapping der Funktions-Parameter auf die zugehörige Kommunikation definiert ist.

Das Application-Process-Element APE definiert die Funktionalität des Feldgerätes, unabhängig von dem verwendeten Netzwerk. In diesem Element sind die Feldgeräte-Parameter spezifiziert, die über den industriellen Feldbus IAF übertragen werden können. Über einem Link L wird eine Verbindung zwischen den Kommunikations-Parametern und den Feldgeräte-Parametern hergestellt. Die Kommunikations-Parameter müssen auf die entsprechenden Feldgeräte-Parameter gemappt werden.

Gemäß der vorliegenden Erfindung wird das Geräte-Element SAGBE als Bestandteil der SCL-Gerätebeschreibungsdatei SSCL gemäß Fig. 2 verwendet, um eine modifizierte SCL-Gerätebeschreibung MSCL gemäß Fig. 8 zu erstellen.

Ergänzend zu dem Geräte-Element SAGBE wird das Data-Type-Template-Element DTTE verwendet, um die Struktur der logischen Knoten LN1...LNn innerhalb der in der industriellen Automation verwendeten Gerätebeschreibung SDD zu reproduzieren.

Die für den Kommunikationsbereich des Device-Manager-Elementes DME der Gerätebeschreibung SDD notwendigen Informationen werden in den spezifischen Private-Elementen PE1 ... PE3 gefunden, wobei die Gerätefunktionsinformation zu den korrespondierenden Datenobjekt-Elementen DOE1...DOEn der logischen Knoten LN1...LNn angegebenen sind. Ebenfalls werden die spezifischen Private-Elemente verwendet, die die generellen Kommunikations-Parameter beschreiben.

Fig. 8 zeigt ein Mapping von der modifizierten MSCL-Gerätebeschreibungsdatei MSCL auf eine Standard-Gerätebeschreibungsdatei SDD, die zur Benutzung des Schaltanlagen-Automatisierungs-Geräts SAG nach dem FDT/DTM-Konzept verwendet wird.

Die modifizierte SCL-Gerätebeschreibungsdatei MSCL enthält in dem Gerätebeschreibungs-Element SAGBE ein Geräteinformations-Element SAGE mit allgemeinen Geräteinformationen des Schaltanlagen-Automatisierungs-Geräts SAG, die als Attribute des Geräteinformations-Elements innerhalb des Feldgeräte-Elementes SAGE abgelegt sind. Die Geräteinformationen werden auf das Device-Identity-Element DIE der Gerätebeschreibungsdatei SDD gemappt.

Ferner sind in dem Gerätebeschreibungs-Element SAGBE ein oder mehrere Logische-Knoten-Elemente LNE vorgesehen, welche verwendet werden, um Parameter innerhalb des Application-Process-Elementes APE der Gerätebeschreibungsdatei SDD zu beschreiben und um diese Parameter auf den korrespondierenden industriellen Feldbus IAF in den Kommunikationsbereich COME des Device-Manager-Elementes DME zu mappen.

Ferner sind in der Gerätebeschreibung SAGBE ein oder mehrere Data-Set-Elemente DSE definiert, welche eine Gruppierung von Objekten repräsentiert und verwendet werden kann, um innerhalb der Gerätebeschreibung SDD eine Gruppe von Parametern bzw. Parametergruppe PGE zu bilden.

Das Data-Type-Template-Element DTTE der modifizierten SCL-Gerätebeschreibungsdatei MSCL kann verwendet werden, um innerhalb der Gerätebeschreibungsdatei SDD dieselbe IEC61850-Struktur zu erzeugen.

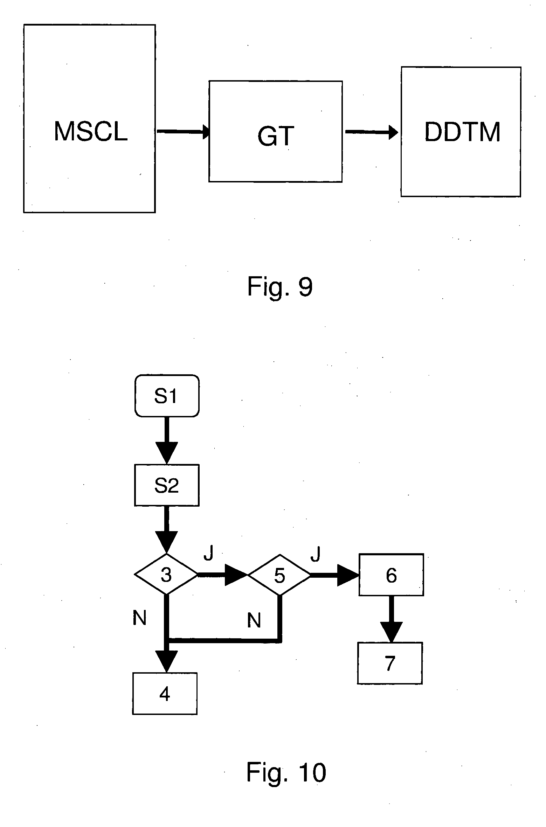

Fig. 9 zeigt rein schematisch die der Erfindung zugrunde liegende Idee, nämlich unmittelbar aus der modifizierten SCL-Geräteschreibungsdatei MSCL mittels eines DTM-Generierungstools GT ein Softwaremodul DDTM des IEC61850-konformen Gerätes SAG zu generieren, in Form eines Geräte-DTM. Gemäß der Erfindung werden zunächst Informationen des Feldbusses IAF, z. B. "MODBUS-Serial-Line" in die modifizierte SCL-Gerätebeschreibungsdatei MSCL eingefügt.

Fig. 10 zeigt einen Verfahrensablauf des Verfahrens gemäß Fig. 9. Nach dem Start des DTM-Generierungstools GT in Verfahrensschritt S1 wird in einem Verfahrensschritt S2 die SCL-Datei MSCL in das DTM-Generierungstool GT importiert. Gegebenenfalls wird in einem Verfahrensschritt S3 die Gültigkeit der SCL-Datei geprüft, unmittelbar nachdem diese importiert wurde. Sollte die SCL-Datei nicht gültig sein in Bezug auf die Definitionen des DTM-Generierungstools, ist das DTM-Generierungstool nicht im Stande das Geräte-DTM zu generieren, so dass das Verfahren im Verfahrensschritt S4 stoppt.

Wenn der Verfahrensschritt S3 nicht durchgeführt wird bzw. die Prüfung ergeben hat, dass die SCL-Datei gültig ist, wird die SCL-Datei hinsichtlich der Verfügbarkeit von Daten, welche die notwendigen Informationen für den industriellen Automations-Feldbus IAF beschreiben, in Verfahrensschritt S5 analysiert. Bei der Analyse wird nach den <private>-XML-Elementen gesucht, welche das Feldbus-Mapping auf die IEC61850-Objekte beschreiben.

Wenn solche Feldbus beschreibenden Daten nicht in den in der SCL-Datei verwendeten IEC61850-Objekten verfügbar sind, ist das DTM-Generierungstool nicht in der Lage das Geräte-DTM zu generieren, so dass das Verfahren im Verfahrensschritt S4 stoppt.

Wenn eine Beschreibung eines Mappings von IEC61850-Objekten in einen industriellen Feldbus verfügbar ist, kann das DTM-Generierungstool GT diese Daten im Verfahrensschritt S6 extrahieren. Im Verfahrensschritt S7 erfolgt sodann der abschließende Schritt der DTM-Generierung. Optional können Feldbus unabhängige Daten wie beispielsweise Produktname, Herstellername, Versionsnummer etc. verwendet werden, um z. B. die grafische Benutzerschnittstelle des Geräte-DTM zu verbessern.

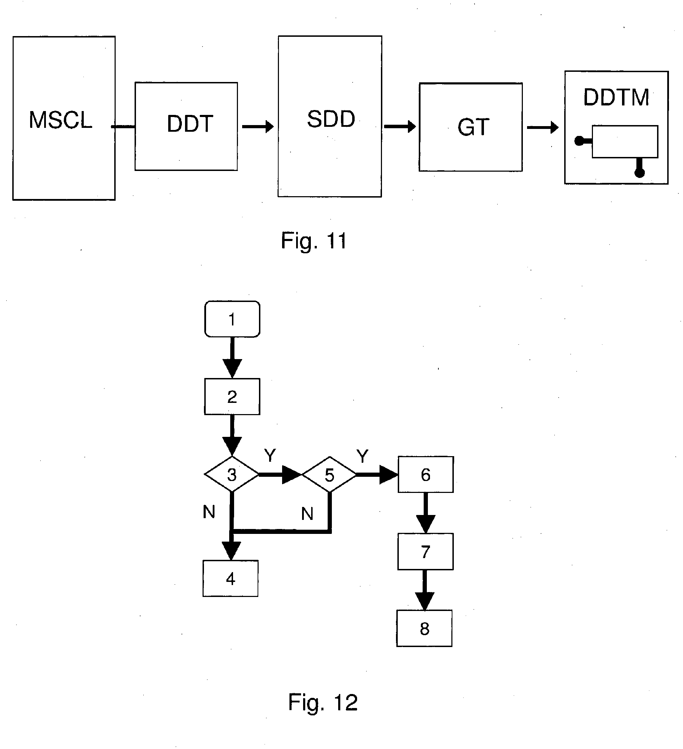

Fig. 11 zeigt rein schematisch ein zweites Verfahren zur Generierung des Softwaremoduls DDTM in Form eines Geräte-DTM aus einer Gerätebeschreibungsdatei in Form einer SCL-Gerätebeschreibung MSCL. Bei diesem Verfahren wird die Gerätebeschreibungsdatei MSCL mittels eines Übersetzers DDT in eine Standard-Gerätebeschreibung SDD übersetzt, aus der sodann mittels eines DTM-Generierungstools GT das Softwaremodul DDTM generiert wird. Dieses Verfahren zeichnet sich dadurch aus, dass existierende DTM-Generierungstools GT für übliche Regelbeschreibungen wie FDCML, EDDL oder DDXML verfügbar sind, und somit eingesetzt werden können.

Fig. 12 zeigt ein Ablaufdiagramm des zweiten Verfahrens zur DTM-Generierung nach Fig. 11, wobei zunächst eine Übersetzung der SCL-Datei MSCL in dem Übersetzer DDT erfolgt. Nach dem Start des Gerätebeschreibungs-Übersetzers DDT im Verfahrensschritt S1 wird die SCL-Datei im Verfahrensschritt S2 in den Übersetzer DDT importiert. Optional wird in Verfahrensschritt S3 die Gültigkeit der SCL-Datei überprüft. Wenn die SCL-Datei in Bezug auf die Definitionen des Gerätebeschreibungs-Übersetzers DDT nicht gültig ist, ist der Übersetzer DDT nicht in der Lage, die Standard-Gerätebeschreibungsdatei SDD aus der SCL-Datei zu generieren, so dass das Verfahren im Verfahrensschritt S4 beendet ist.

Sollte eine Prüfung gemäß Verfahrensschritt S3 nicht durchgeführt werden bzw. wenn die SCL-Datei gültig ist, wird die SCL-Datei im Verfahrensschritt S5 in Bezug auf Verfügbarkeit von Daten, welche die notwendigen Informationen für den industriellen Automations-Feldbus IAF beschrieben, analysiert. Dabei kann eine Suche nach <private>-Elementen erfolgen, welche das Feldbus-Mapping auf die IEC61850-Objekten beschreiben. Sollten solche Feldbus-Daten Beschreibungen von IEC61850-Objekten nicht verfügbar sein, ist der Übersetzer DDT nicht in der Lage, eine Standard-Gerätebeschreibung aus der SCL-Datei zu generieren, so dass das Verfahren in Schritt S4 beendet ist.

Sofern eine Beschreibung eines Mappings der IEC61850-Objekte auf den industriellen Feldbus verfügbar ist, kann der Übersetzer DDT diese Daten im Verfahrensschritt 6 extrahieren. Diese Daten sowie Feldbus unabhängige Daten wie beispielsweise Produktname, Herstellername, Versionsnummer usw. werden benötigt, um eine automatische Generierung einer Standard-Gerätebeschreibung SDD in Verfahrensschritt S7 durchzuführen. Diese Standard-Gerätebeschreibung SDD wird als Eingangsdatei für ein existierendes DTM-Generierungstool GT verwendet, um automatisch ein Softwaremodul DDTM in Form eines Geräte-DTM zu generieren.

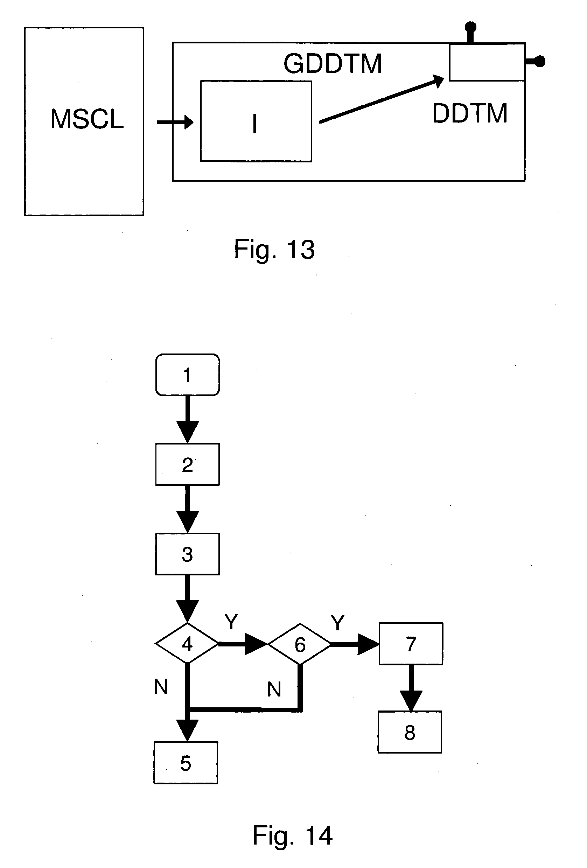

Fig. 13 zeigt rein schematisch ein drittes Verfahren zur Verwendung eines Softwaremodul DDTM in Form eines Geräte-DTM's unter Einbeziehung einer Gerätebeschreibungsdatei MSCL in Form einer SCL-Datei. Bei diesem Verfahren wird die SCL-Datei mittels eines Interpreters I während der Laufzeit des Geräte-DTM's interpretiert. In diesem Fall wird das Geräte-DTM als generisches DTM bezeichnet, da das Geräte-DTM nicht für ein spezifisches Gerät entwickelt wurde.

Fig. 14 zeigt einen Verfahrensablauf des Verfahrens gemäß Fig. 13. Das Verfahren wird während der Laufzeit eines Geräte-DTM's durchgeführt. In einem Verfahrensschritt S1 müssen die SCL-Datei bzw. SCL-Dateien in einem spezifischen Speicher abgelegt werden, damit das generische Geräte-DTM auf die SCL-Datei bzw. SCL-Dateien zugreifen kann. Nach dem Starten des generischen Geräte-DTM's in einem zugehörigen FDT-Frame gemäß Verfahrensschritt S2 wird die SCL-Datei in Verfahrensschritt S3 in das generische Geräte-DTM importiert. Optional kann in Verfahrensschritt S4 die Gültigkeit der SCL-Datei geprüft werden. Sollte die SCL-Datei bezogen auf die Definitionen des generischen Geräte-DTM's nicht gültig sein, ist das DTM nicht in der Lage die SCL-Datei zu interpretieren und das Verfahren endet mit Verfahrensschritt S5.

Sollte keine Überprüfung erfolgen bzw. sollte die SCL-Datei entsprechend den Kriterien des generischen Geräte-DTM's gültig sein, wird die SCL-Datei in Verfahrensschritt S6 nach verfügbaren Daten analysiert, auf die auch über den Feldbus wie z. B. MODBUS Serial Line zugegriffen werden kann.

Die Analyse erfolgt, indem <private>-Elemente gesucht werden, die das Feldbus-Mapping der IEC61850-Objekte beschreiben. Wenn solche Beschreibungen von Feldbus-Daten nicht in der verwendeten SCL-Datei verfügbar sind ist das generische Geräte-DTM nicht in der Lage, die SCL-Datei zu interpretieren, so dass das Verfahren in Verfahrensschritt S5 stoppt.

Sofern eine Beschreibung eines Mappings von IEC61850-Objekten auf einen Feldbus verfügbar ist, kann das generische Geräte-DTM diese Daten in Verfahrensschritt S7 extrahieren. Diese Daten werden benötigt, um Zugriff auf die Daten über einen industriellen Feldbus durch Verwendung der FDT/DTM-Technologie zu erhalten (Verfahrensschritt S8). Optional können andere Feldbus-unabhängige Daten wie z. B. Produktname, Herstellername, Versionsnummer usw. verwendet werden, um diese Werte einem Benutzer innerhalb einer grafischen Benutzeroberfläche des DTM's anzuzeigen.

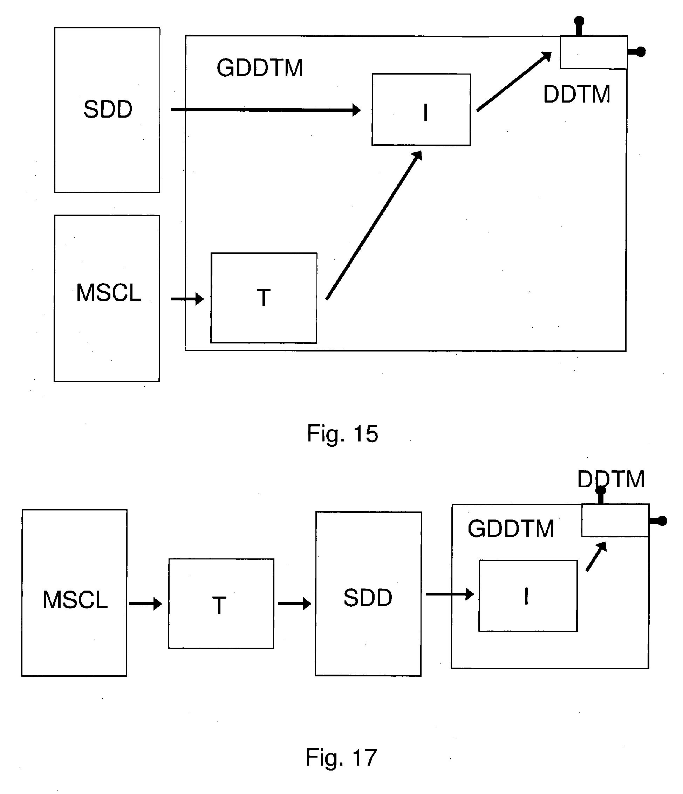

Fig. 15 zeigt eine weitere Ausführungsform des Verfahrens, wobei ein generisches Geräte-DTM GDDTM einen Interpreter I aufweist, der entweder die Standard-Gerätebeschreibungen SDD oder modifizierte SCL-Gerätebeschreibungen MSCL in Form von SCL-Dateien, welche zuvor mittels des Übersetzers T übersetzt wurden, interpretiert. Das Verfahren wird während der Laufzeit des Geräte-DTM's ausgeführt.

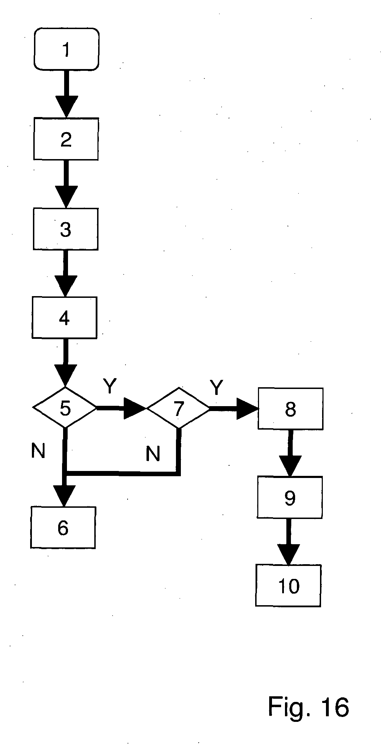

Ein entsprechendes Ablaufdiagramm ist in Fig. 16 dargestellt. Die SCL-Datei bzw. SCL-Dateien müssen in Verfahrensschritt S1 in einen spezifischen Speicherbereich wie z. B. Device Library Folder abgelegt werden, damit die Dateien durch das generische Geräte-DTM erreichbar sind. Nach Start des generischen Geräte-DTM gemäß Verfahrensschritt S2 in einem zugehörigen FDT-Frame wird die SCL-Datei auch in Verfahrensschritt S3 in das generische Geräte-DTM importiert.

Innerhalb des generischen Geräte-DTM's wird ein Übersetzer T in Verfahrensschritt S4 gestartet. Optional kann die Gültigkeit der SCL-Datei im Verfahrensschritt S5 überprüft werden. Sollte die SCL-Datei nicht gültig bezogen auf die Definitionen des Übersetzers T sein, endet das Verfahren im Verfahrensschritt S6.

Sollte die Überprüfung nicht erfolgen bzw. die SCL-Datei gütig sein, wird die SCL-Datei betreffend verfügbarer Daten im Verfahrensschritt S7 analysiert, auf die ebenfalls über einen Feldbus z. B. MODBUS Serial Line zugegriffen werden kann. Die Analyse kann ausgeführt werden durch Suchen der <private>-Elemente, welche das Feldbus-Mapping der IEC61850-Objekte beschreiben. Sollten solche Feldbus-Daten-Beschreibungen nicht in der verwendeten SCL-Datei verfügbar sein, ist der Übersetzer T nicht in der Lage, eine Gerätebeschreibung aus dieser SCL-Datei zu generieren, so dass das Verfahren in Verfahrensschritt S6 endet.

Wenn eine Beschreibung des Mapping von IEC61850-Objekten auf einen industriellen Feldbus vorhanden ist, kann der Übersetzer T diese Daten in Verfahrensschritt S8 extrahieren. Diese Daten zusammen mit einigen Feldbus-unabhängigen Daten wie Produktname, Herstellername, Versionsnummer usw. werden benötigt, um eine automatische Generierung einer Standard-Gerätebeschreibung SDD im Verfahrensschritt S9 durchzuführen. Diese Standard-Gerätebeschreibung SDD ist nur intern in dem generischen Geräte-DTM verfügbar und kann von einem bereits existierenden Teil des generischen Geräte-DTM's benutzt werden, um im Verfahrensschritt S 10 Zugriff auf die Daten über den industriellen Feldbus durch Verwendung der FDT/DTM-Technologie zu erhalten.

Fig. 17 zeigt eine Verfahrensweise, wobei der Übersetzer T außerhalb des generischen Geräte-DTM's GDDTM angeordnet ist. Bei diesem Verfahren wird die generierte Standard-Gerätebeschreibung SDD im Verfahrensschritt S8 gemäß Fig. 12 nicht zur Generierung eines Geräte-DTM in einem DTM-Generierungstool verwendet wird, sondern als Eingangsdatei für das generische Geräte-DTM.

Durch die Erfindung wird die Möglichkeit eröffnet, unmittelbar aus einer SCL-Gerätebeschreibungsdatei eines IED nach IEC61580-Standard ein DTM zu generieren. Dies wird durch Beschreibung des industriellen Feldbusses innerhalb der SCL-Beschreibung erreicht, wobei die SCL-Beschreibung zur Generierung eines DTM's verwendet wird.

Die FDT/DTM-Technologie war bisher im Bereich der IEC61850 nicht verfügbar. Durch die Erzeugung von DTM's auf der Basis von SCL-Beschreibungen wird die Möglichkeit der automatischen Generierung von DTM's eröffnet, mit der Folge, dass die FDT/DTM-Technologie in dem IEC61850-Bereich anwendbar ist. Somit besteht die Möglichkeit, einerseits Feldgeräte der Industrie-Automatisierung und andererseits IEC61850-Geräte in einem Automatisierungssystem durch FDT/DTM-Technologie einfach zu kombinieren.

Folglich ist die Integration von Energie-Geräten nach IEC61850-Standard sowie die damit verbundenen Daten in eine Industrieanwendung sehr einfach realisierbar.

## Patentansprüche

1. Verfahren zur Anbindung eines Schaltanlagen-Automatisierungs-Gerätes (SAG) gemäß IEC61850 Kommunikationsnorm an einen Industrie-Automatisierungs-Feldbus (IAF) eines Industrie-Automatisierungs-Systems (IAS),
**dadurch gekennzeichnet,**
**dass** das Verfahren die folgenden Schritte umfasst:
- Erzeugen einer modifizierten SCL-Gerätebeschreibungsdatei (MSCL), die eine Gerätebeschreibungsdatei gemäß der Substation-Configuration-Description-Languäge-Norm ist, für das Schaltanlagen-Automatisierungs-Gerät, wobei eine standardisierte SCL-Gerätebeschreibungsdatei (SSCL), die eine Gerätebeschreibungsdatei gemäß der Substation-Configuration-Description-Language-Norm ist, durch Implementierung zumindest eines Daten-Objektes (DOE1 ... DOEn) mit Mapping-Informationen in Form von Kommunikations- und Funktions-Parametern des IndustrieAutomatisierungs-Feldbusses (IAF) erweitert wird,
- Compilieren der modifizierten SCL-Gerätebeschreibungsdatei (MSCL) in eine DTM-Komponente (DDTM), die eine Komponente gemäß der Device-Type-Manager-Norm ist, in der Daten und Funktionen des Schaltanlagen-Automatisierungs-Gerätes (SAG) einschließlich der Mapping-Informationen gekapselt sind und die als Softwaremodul für das Schaltanlagen-Automatisierungs-Gerät (SAG) dient und eine definierte Schnittstelle zu einer FDT-Frame-Applikation (FFA), die eine Frame-Applikation gemäß der Field-Device-Tool-Norm ist, in dem Industrie-Automatisierungs-System (IAS) aufweist,
- Konfiguration des Schaltanlagen-Automatisierungs-Gerätes (SAG) mittels der FDT-Frame-Applikation (FFA) unter Verwendung der DTM-Komponente (DDTM), wobei unter Berücksichtigung der gekapselten Mapping-Informationen ein Mapping von Kommunikations- und Funktions-Parametern gemäß der IEC61850-Norm auf die Kommunikations- und Funktions-Parameter des Industrie-Automatisierungs-Feldbusses (IAF) durchgeführt wird.

2. Verfahren nach Anspruch 1, wobei die Mapping-Informationen in einem Private-XML-Element (PE1 ... PEn), das ein Element gemäß der Extensible-Markup-Language-Norm ist, der modifizierten SCL-Gerätebeschreibungsdatei (MSCL) gekapselt werden.

3. Verfahren nach Anspruch 2, wobei das Private-XML-Element (PE1 ... PEn) durch einen Feldbus-Typ des Industrie-Automatisierungs-Feldbusses sowie ein oder mehrere weitere Datenfelder (F1 ... F2) definiert wird, wobei ein erstes Daten-Feld (F1) ein Daten-Objekt des zumindest einen Daten-Objektes (DIE1 ... DOEn) repräsentiert, wobei das erste Daten-Feld durch einen Großbuchstaben gefolgt von einem Daten-Klasse-Typ gemäß der IEC61850 -Norm definiert ist.

4. Verfahren nach Anspruch 2, wobei das Private-XML-Element (PE1 ... PEn) durch einen Feldbus-Typ des Industrie-Automatisierungs-Feldbusses sowie ein oder mehrere weitere Datenfelder (F1 ... F2) definiert wird, wobei ein erstes Daten-Feld (F1) ein Daten-Attribut des zumindest einen Daten-Objektes (DOE1 ... DOEn) repräsentiert, wobei das erste Datenfeld durch einen Großbuchstaben gefolgt von einem Daten-Attribute-Typ gemäß der IEC61850-Norm definiert ist.

5. Verfahren nach zumindest einem der vorhergehenden Ansprüche, wobei dem ersten Daten-Feld (F1) weitere Daten-Felder (F2 ... Fn) folgen, die die funktionalen Nebenbedingungen (FC = Functional Constraints) nach dem IEC61850 Standard repräsentieren.

6. Verfahren nach zumindest einem der Ansprüche 3 und 4, wobei der Industrie-AutomatisierungsFeldbus (IAF) gemäß dem MODBUS-Norm ist, und wobei die Kommunikations-Parameter des Industrie-Automatisierungs-Feldbusses (IAF) die Kommunikations-Mode (MBSM), die Baudrate (MBSBR), den Adressbereich, die Parität (MBSP), oder Stop-Bits (MBSSB) sind.

7. Verfahren nach zumindest einem der vorhergehenden Ansprüche, wobei die Beschreibung der Mapping-Informationen des zumindest einen Daten-Objektes (DOE1 ... DOEn) in der modifizierten SCL-Gerätebeschreibungsdatei (MSCL) erfolgt.

8. Verfahren nach zumindest einem der vorhergehenden Ansprüche, wobei die modifizierte SCL-Gerätebeschreibungsdatei (MSCL) eine .ICD-Datei oder .IID-Datei gemäß der IEC61850-Norm ist.

9. Verfahren zum Erzeugen einer DTM-Komponente (DDTM), die eine Komponente gemäß der Device-Type-Manager-Norm ist, wobei die DTM-Komponente als Softwaremodul dient und definierte Schnittstellen zu einer FDT-Frame-Applikation (FFA), die eine Frame-Applikation gemäß der Field-Device-Tool-Norm ist, aufweist, **dadurch gekennzeichnet, dass** das Verfahren die folgenden Verfahrensschritte umfasst:
- Modifizieren einer Standard-SCL-Gerätebeschreibungsdatei (SSCL) nach IEC61850 Kommunikationsnorm, die eine Gerätebeschreibungsdatei gemäß der Substation-Configuration-Description-Language-Norm ist, indem IEC61850-0bjekte mit Mapping-Informationen in Form von Kommunikations-Parametern und Funktions-Parametern eines Industrie-Automatisierungs-Feldbusses (IAF) in die modifizierte SCL-Gerätebeschreibungsdatei (MSCL) implementiert werden und
- Generieren der DTM-Komponente (DDTM) mittels eines DTM-Generators (GT) aus der modifizierten SCL-Gerätebeschreibungsdatei (MSCL).

10. Verfahren nach Anspruch 9, wobei die DTM-Komponente (DDTM) mittels eines Compilers (GT) unmittelbar aus der modifizierten SCL-Gerätebeschreibungsdatei (MSCL) generiert wird.

11. Verfahren nach zumindest einem der vorhergehenden Ansprüche, wobei die DTM-Komponente (DDTM) mittelbar aus der modifizierten SCL-Gerätebeschreibungsdatei (MSCL) generiert wird, wobei die modifizierte SCL-Gerätebeschreibungsdatei mittels eines ersten Compilers (DDT) zunächst in eine Standard-Gerätebeschreibungsdatei (SDD) und diese mittels eines Standard-DTM-Generierungs-Tools (GT) in die DTM- Komponente (DDTM) übersetzt wird.

12. Verfahren nach zumindest einem der vorhergehenden Ansprüche, wobei die modifizierte SCL-Gerätebeschreibungsdatei (MSCL) direkt oder indirekt während der Laufzeit der DTM-Komponente in einem Interpreter (I) interpretiert wird.

13. Verfahren nach zumindest einem der vorhergehenden Ansprüche, wobei bei der Compilierung der modifizierten SCL-Gerätebeschreibungsdatei (MSCL) überprüft wird, ob Mapping-Informationen in der Datei enthalten sind und ob entsprechende Daten verfiigbar sind.

14. Verfahren nach zumindest einem der vorhergehenden Ansprüche, wobei bei der Analyse der modifizierten SCL-Gerätebeschreibungsdatei (MSCL) eine Suche nach Mapping-Informationen durchgeführt wird, dass die Mapping-Informationen extrahiert werden und dass die extrahierten Daten Grundlage für die Generierung der DTM-Komponente bilden.

15. Verfahren nach zumindest einem der vorhergehenden Ansprüche, wobei Feldbus-unabhängige Daten wie Produktname, Herstellername oder Versionsnummer zur Bildung einer grafischen Bedienoberfläche des Schaltanlagen-Automatisierungs-Gerätes extrahiert werden.

16. Verfahren nach zumindest einem der vorhergehenden Ansprüche, wobei die modifizierte SCL-Gerätebeschreibungsdatei (MSCL) in eine Standard-Gerätebeschreibungsdatei (SDD) übersetzt wird, wobei der Verfahrensschritt des Übersetzens folgende Schritte umfasst:
- Prüfen der modifizierten SCL-Gerätebeschreibungsdatei (MSCL) hinsichtlich der Verfügbarkeit Bus-spezifischer Mapping-Informationen,
- Suche nach Private-XML-Elementen (PE1 ... Pen) in der modifizierten SCL-Gerätebeschreibungsdatei,
- Extrahieren einer Beschreibung eines Mappings von IEC61850-Objekten auf den Industrie-Automatisierungs-Feldbus (IAF).

17. Verfahren nach zumindest einem der vorhergehenden Ansprüche, wobei die modifizierte SCL-Gerätebeschreibungsdatei (MSCL) in einen Übersetzer (I) eingelesen wird,
- wobei die Gültigkeit der SGL Gerätebschreibungsdatei (MSGL) geprüft wird,
- wobei die modifizierte SCL-Gerätebeschreibungsdatei (MSCL) hinsichtlich verfügbarer Mapping-Informationen analysiert wird,
- wobei die modifizierte SCL-Gerätebeschreibungsdatei (MSCL) in die Standard-Gerätebeschreibungsdatei (SDD) übersetzt wird und
- wobei die Standard-Gerätebeschreibungsdatei (SDD) mittels eines Generierungstools (GT) in das Softwaremodul (DDTM) compiliert wird.

18. Verfahren nach zumindest einem der vorhergehenden Ansprüche, wobei die modifizierte SCL-Gerätebeschreibungsdatei (MSCL) mittels des Interpreters (I) während der Laufzeit interpretiert wird, wobei die SCL-Gerätebeschreibungsdatei zunächst in einem Speicher abgelegt wird,
- wobei die modifizierte SCL-Gerätebeschreibungsdatei (MSCL) nach dem Start des generischen Softwaremoduls (GDDTM) importiert wird,
- wobei die modifizierte SCL-Gerätebeschreibungsdatei (MSCL) hinsichtlich verfügbarer Daten analysiert, indem Mapping-Informationen aufgesucht werden, welche ein Mapping der verfügbaren IEC61850-Objekte auf den industriellen Automatisierungs-Feldbus (IAF) beschreiben und wobei die Mapping-Informationen extrahiert werden.

## Claims

1. A method for connecting a switching station automation device (SAG) according to the IEC61850 communication standard to an industry automation field bus (IAF) of an industry automation system (IAS),
**characterized in that**
the method comprises the following steps:
- Production of a modified SCL device description file (MSCL), which is a device description file according to the Substation Configuration Description Language standard, for the switching station automation device, whereby a standardized SCL device description file (SSCL), which is a device description file according to the Substation Configuration Description Language standard, is expanded by implementing at least one data object (DOE1... DOEn) with mapping information in the form of communication- and functional parameters of the industry automation field bus (IAF),
- Compiling the modified SCL device description file (MSCL) into a DTM component (DDTM), which is a component according to the Device Type Manager standard, in which data and functions of the switching station automation device (SAG) including the mapping information are encapsulated, and which serves as software module for the switching station automation device (SAG) and has a defined interface to a FDT frame application (FFA), which is a frame application according to the Field Device Tool standard, in the industry automation system (IAS),
- Configuration of the switching station automation device (SAG) by the FDT frame application (FFA) using the DTM component (DDTM), whereby a mapping of the IEC61850 communication- and functional parameters onto the communication parameters and functional parameters of the industry automation field bus (IAF) is carried out taking into consideration the encapsulated mapping information.

2. Method according to claim 1,
**characterized in that**
the mapping information is encapsulated in a private XML element (PE1... PEn), which is an element according to the Extensible Markup Language standard, of the modified SCL device description file (MSCL).

3. Method according to claim 2,
**characterized in that**
the private XML element (PE1... PEn) is defined by a field bus type of the industry automation field bus as well as by one or more further data fields (F1...F2), whereby a first data field (F1) represents a data object of the at least one data object (DOE1 ... DOEn), whereby the first data field is defined by a capital letter followed by a data class type according to the IEC61850 standard.

4. Method according to claim 2,
**characterized in that**
the private XML element (PE1... PEn) is defined by a field bus type of the industry automation field bus as well as by one or more further data fields (F1...F2), whereby a first data field (F1) represents a data attribute of the at least one data object (DOE1 ... DOEn), whereby the first data field is defined by a capital letter followed by a data attribute type according to the IEC61850 standard.

5. Method according to at least one of the previous claims,
**characterized in that**
the first data field (F1) is followed by further data fields (F2...Fn) that represent the functional secondary conditions (FC = Functional Constraints) according to the IEC61850 standard.

6. Method according to at least one of the claims 3 and 4,
**characterized in that**
the industry automation field bus (IAF) is in accordance with the MODBUS standard, and whereby the communication parameters of the industry automation field bus (IAF) are the communication mode (MBSM), the baud rate (MBSBR), the address range, the parity (MBSP), or stop bits (MBSSB).

7. Method according to at least one of the previous claims,
**characterized in that**
the description of the mapping information of the at least one data object (DOE1 ... DOEn) takes place in the modified SCL device description file (MSCL).

8. Method according to at least one of the previous claims,
**characterized in that**
the modified SCL device description file (MSCL) is an ICD file or IID file according to the IEC61850 standard.

9. Method for producing a DTM component (DDTM), which is a component according to the Device Type Manager standard,
whereby the DTM component serves as software module and has defined interfaces to an FDT frame application (FFA), which is a frame application according to the Field Device Tool standard,
**characterized in that**
the method comprises the following method steps:
- Modification of a standard SCL device description file (SSCL) according to the IEC61850 communication standard, which is a device description file according to the Substation Configuration Description Language standard, **in that** IEC61850 objects with mapping information in the form of communication parameters and functional parameters of an industry automation field bus (IAF) are implemented into the modified SCL device description file (MSCL), and
- Generation of the DTM component (DDTM) by a DTM generator (GT) from the modified SCL device description file (MSCL).

10. Method according to claim 9,
**characterized in that**
the DTM component (DDTM) is generated by a compiler (GT) directly from the modified SCL device description file (MSCL).

11. Method according to at least one of the previous claims,
**characterized in that**
the DTM component (DDTM) is generated directly from the modified SCL device description file (MSCL), whereby the modified SCL device description file is at first compiled by a first compiler (DDT) into a standard device description file (SDD), and the latter is compiled by a standard DTM generating tool (GT) into the DTM component (DDTM).

12. Method according to at least one of the previous claims,
**characterized in that**
the modified SCL device description file (MSCL) is interpreted directly or indirectly during the run time of the DTM component in an interpreter (I).

13. Method according to at least one of the previous claims,
**characterized in that**
during the compiling of the modified SCL device description file (MSCL) it is checked whether mapping information is contained in the file and whether corresponding data are available.

14. Method according to at least one of the previous claims,
**characterized in that**
during the analysis of the modified SCL device description file (MSCL), a search is carried out for mapping information, that the mapping information is extracted, and that the extracted data form the basis for the generation of the DTM component.

15. Method according to at least one of the previous claims,
**characterized in that**
field-bus-independent data, such as product name, manufacturer name or version number are extracted for forming a graphic operating surface of the switching station automation device.

16. Method according to at least one of the previous claims,
**characterized in that**
the modified SCL device description file (MSCL) is compiled into a standard device description file (SDD), whereby the method step of the compiling comprises the following steps:
- Checking the SCL device description file (MSCL) regarding the availability of bus-specific mapping information,
- Searching for private XML elements (PE1... PEn) in the modified SCL device description file,
- Extracting a description of a mapping of IEC61850 objects onto the industry automation field bus (IAF).

17. Method according to at least one of the previous claims,
**characterized in that**
the modified SCL device description file (MSCL) is read into a compiler (I),
- whereby the validity of the SCL device description file (MSCL) is checked,
- whereby the modified SCL device description file (MSCL) is analysed regarding available mapping information,
- whereby the modified SCL device description file (MSCL) is compiled into the standard device description file (SDD), and
- whereby the standard device description file (SSD) is compiled by a generating tool (GT) into the software module (DDTM).

18. Method according to one of the previous claims,
**characterized in that**
the modified SCL device description file (MSCL) is interpreted by the interpreter (I) during the run time, whereby the SCL device description file is at first filed in a memory,
- whereby the modified SCL device description file (MSCL) is imported after the start of the generic software module (GDDTM),
- whereby the modified SCL device description file (MSCL) is analysed regarding available data **in that** mapping information is sought that describes a mapping of the available IEC61850 objects on the industrial automation field bus (IAF), and whereby the mapping information is extracted.

## Revendications

1. Procédé destiné à relier un appareil d'automatisation de postes de commutation (SAG) conformément à la norme de communication CEI 61850 à un bus de terrain d'automatisation industriel (IAF) d'un système d'automatisation industriel (IAS),
**caractérisé en ce**
**que** le procédé comprend les étapes suivantes :
- création d'une fichier SCL modifié de description d'appareil (MSCL), qui est un fichier de description d'appareil conformément à la norme Substation Configuration Description Language (langage de configuration et de description de poste), pour l'appareil d'automatisation de postes de commutation, sachant qu'un fichier SCL standardisé de description d'appareil (SSCL), qui est un fichier de description d'appareil conformément à la norme Substation Configuration Description Language, est élargi par implémentation d'au moins un objet de données (DOE1 ... DOEn) avec informations de mise en correspondance sous forme de paramètres de communication et de fonction du bus de terrain d'automatisation industriel (IAF),
- compilation du fichier SCL modifié de description d'appareil (MSCL) dans une composante DTM (DDTM), qui est une composante conformément à la norme Device Type Manager (gestionnaire de type d'appareil), dans laquelle sont encapsulées des données et fonctions de l'appareil d'automatisation de postes de commutation (SAG), y compris les informations de mise en correspondance, et qui sert de module logiciel pour l'appareil d'automatisation de postes de commutation (SAG) et présente dans le système d'automatisation industriel (IAS) une interface définie vers une application cadre FDT (FFA), qui est une application cadre conformément à la norme Field Device Tool (outil d'appareil de terrain),
- configuration de l'appareil d'automatisation de postes de commutation (SAG) au moyen de l'application cadre FDT (FFA) en utilisant la composante DTM (DDTM), sachant qu'en tenant compte des informations de mise en correspondance encapsulées est effectuée une mise en correspondance de paramètres de communication et de fonction conformément à la norme CEI 61850 sur les paramètres de communication et de fonction du bus de terrain d'automatisation industriel (IAF).

2. Procédé selon la revendication 1, dans lequel les informations de mise en correspondance sont encapsulées dans un élément XML privé (PE1 ... PEn), qui est un élément conformément à la norme Extensible Markup Language (langage de balisage extensible), du fichier SCL modifié de description d'appareil (MSCL).

3. Procédé selon la revendication 2, dans lequel l'élément XML privé (PE1 ... PEn) est défini par un type de bus de terrain du bus de terrain d'automatisation industriel ainsi que par une ou plusieurs autre(s) zone(s) de données (F1 ... F2), sachant qu'une première zone de données (F1) représente un objet de données de l'au moins un objet de données (DOE1 ... DOEn), la première zone de données étant définie par une majuscule suivie d'un type de classe de données conformément à la norme CEI 61850.

4. Procédé selon la revendication 2, dans lequel l'élément XML privé (PE1 ... PEn) est défini par un type de bus de terrain du bus de terrain d'automatisation industriel ainsi que par une ou plusieurs autre(s) zone(s) de données (F1 ... F2), sachant qu'une première zone de données (F1) représente un attribut de données de l'au moins un objet de données (DOE1 ... DOEn), la première zone de données étant définie par une majuscule suivie d'un type d'attribut de données conformément à la norme CEI 61850.

5. Procédé selon au moins une des revendications précédentes, dans lequel la première zone de données (F1) est suivie par d'autres zones de données (F2 ... Fn) qui représentent les conditions fonctionnelles secondaires (FC = Functional Constraints) selon le standard CEI 61850.

6. Procédé selon au moins une des revendications 3 et 4, sachant que le bus de terrain d'automatisation industriel (IAF) est conforme à la norme MODBUS, et que les paramètres de communication du bus de terrain d'automatisation industriel (IAF) sont le mode de communication (MBSM), le débit en bauds (MBSBR), la zone d'adresse, la parité (MBSP) ou des bits de fin (MBSSB).

7. Procédé selon au moins une des revendications précédentes, dans lequel la description des informations de mise en correspondance de l'au moins un objet de données (DOE1 ... DOEn) a lieu dans le fichier SCL modifié de description d'appareil (MSCL).

8. Procédé selon au moins une des revendications précédentes, dans lequel le fichier SCL modifié de description d'appareil (MSCL) est un fichier .ICD ou un fichier .IID conformément à la norme CEI 61850.

9. Procédé destiné à créer une composante DTM (DDTM), qui est une composante conformément à la norme Device Type Manager, sachant que la composante DTM sert de module logiciel et présente des interfaces définies vers une application cadre FDT (FFA) qui est une application cadre conformément à la norme Field Device Tool, **caractérisé en ce que** le procédé comprend les étapes suivantes :
- modification d'un fichier SCL standard de description d'appareil (SSCL) selon la norme de communication CEI 61850, qui est un fichier de description d'appareil conformément à la norme Substation Configuration Description Language, par le fait que des objets CEI 61850 avec informations de mise en correspondance sous forme de paramètres de communication et de fonction d'un bus de terrain d'automatisation industriel (IAF) sont implémentés dans le fichier SCL modifié de description d'appareil (MSCL), et
- création de la composante DTM (DDTM) au moyen d'un générateur DTM (GT) à partir du fichier SCL modifié de description d'appareil (MSCL).

10. Procédé selon la revendication 9, dans lequel la composante DTM (DDTM) est créée au moyen d'un compilateur (GT) directement à partir du fichier SCL modifié de description d'appareil (MSCL).

11. Procédé selon au moins une des revendications précédentes, dans lequel la composante DTM (DDTM) est créée indirectement à partir du fichier SCL modifié de description d'appareil (MSCL), sachant qu'au moyen d'un premier compilateur (DDT), le fichier SCL modifié de description d'appareil est tout d'abord traduit dans un fichier standard de description d'appareil (SDD) et ce dernier est traduit dans la composante DTM (DDTM) au moyen d'un outil de génération de DTM standard (GT).

12. Procédé selon au moins une des revendications précédentes, dans lequel le fichier SCL modifié de description d'appareil (MSCL) est interprété directement ou indirectement dans un interprète (I) pendant la durée d'exécution de la composante DTM.

13. Procédé selon au moins une des revendications précédentes, dans lequel la compilation du fichier SCL modifié de description d'appareil (MSCL) est contrôlée pour savoir si des informations de mise en correspondance sont contenues dans le fichier et si des données correspondantes sont disponibles.

14. Procédé selon au moins une des revendications précédentes, dans lequel lors de l'analyse du fichier SCL modifié de description d'appareil (MSCL) est effectué une recherche d'informations de mise en correspondance, sachant que les informations de mise en correspondance sont extraites et que les données extraites constituent la base de la création de la composante DTM.

15. Procédé selon au moins une des revendications précédentes, dans lequel des données indépendantes du bus de terrain, telle que désignation de produit, nom de fabricant ou numéro de version, sont extraites pour former une interface utilisateur graphique de l'appareil d'automatisation de postes de commutation.

16. Procédé selon au moins une des revendications précédentes, dans lequel le fichier SCL modifié de description d'appareil (MSCL) est traduit dans un fichier standard de description d'appareil (SDD), sachant que l'opération de traduction comprend les étapes suivantes :
- contrôle du fichier SCL modifié de description d'appareil (MSCL) en ce qui concerne la disponibilité d'informations de mise en correspondance spécifiques au bus,
- recherche d'éléments XML privés (PE1 ... Pen) dans le fichier SCL modifié de description d'appareil,
- extraction d'une description d'une correspondance d'objets CEI 61850 sur le bus de terrain d'automatisation industriel (IAF).

17. Procédé selon au moins une des revendications précédentes, dans lequel le fichier SCL modifié de description d'appareil (MSCL) est lu dans un traducteur (I),
- sachant que la validité du fichier SCL de description d'appareil (MSCL) est vérifiée,
- que le fichier SCL modifié de description d'appareil (MSCL) est analysé en ce qui concerne des informations de mise en correspondance disponibles,
- que le fichier SCL modifié de description d'appareil (MSCL) est traduit dans le fichier standard de description d'appareil (SDD), et
- que le fichier standard de description d'appareil (SDD) est compilé dans le module logiciel (DDTM) au moyen d'un outil de génération (GT).

18. Procédé selon au moins une des revendications précédentes, dans lequel le fichier SCL modifié de description d'appareil (MSCL) est interprété pendant la durée d'exécution au moyen de l'interprète (I), le fichier SCL de description d'appareil étant tout d'abord stocké dans une mémoire,
- sachant que le fichier SCL modifié de description d'appareil (MSCL) est importé après le démarrage du module logiciel générique (GDDTM),
- que le fichier SCL modifié de description d'appareil (MSCL) est analysé en ce qui concerne des données disponibles, en recherchant des informations de mise en correspondance qui décrivent une correspondance des objets CEI 61850 disponibles sur le bus de terrain d'automatisation industriel (IAF), et que les informations de mise en correspondance sont extraites.
